# EUROPÄISCHE PATENTSCHRIFT

(11) **EP 0 845 027 B1**
(45) Veröffentlichungstag und Bekanntmachung des Hinweises auf die Patenterteilung: **04.12.2002**
(21) Anmeldenummer: 96928416.5
(22) Anmeldetag: 06.08.1996
(51) Int. Cl.: C11D 3/39

(54) **KATALYTISCH WIRKSAME AKTIVATORKOMPLEXE FÜR PERSAUERSTOFFVERBINDUNGEN**
CATALYTIC ACTIVATOR COMPLEXES FOR PEROXYGEN COMPOUNDS
COMPLEXES D'ACTIVATEURS A ACTION CATALYTIQUE POUR COMPOSES PEROXYGENE

(30) Priorität: 15.08.1995 DE 19529905
(43) Veröffentlichungstag der Anmeldung: 03.06.1998
(73) Patentinhaber: Henkel Kommanditgesellschaft auf Aktien, 40589 Düsseldorf-Holthausen (DE)
(72) Erfinder: BLUM, Helmut, D-40595 Düsseldorf (DE); PEGELOW, Ulrich, D-40597 Düsseldorf (DE); MAYER, Bernd, D-40597 Düsseldorf (DE)
(86) Internationale Anmeldenummer: EP9603467
(87) Internationale Veröffentlichungsnummer: WO97007192

(56) Entgegenhaltungen:
- EP-A- 0 392 592
- EP-A- 0 408 131
- EP-A- 0 458 397
- EP-A- 0 549 271
- EP-A- 0 630 964
- EP-A- 0 693 550
- WO-A-96/23860

## Beschreibung

Die vorliegende Erfindung betrifft die Verwendung von bestimmten Übergangsmetall-Diiminkomplexen vom sogenannten Salen-Komplextyp als katalytisch wirksame Aktivatoren für Persauerstoffverbindungen, insbesondere zum Bleichen von Farbanschmutzungen beim Waschen von Textilien, sowie Wasch-, Reinigungs- und Desinfektionsmittel, die derartige Aktivatoren beziehungsweise Katalysatoren enthalten.

Anorganische Persauerstoffverbindungen, insbesondere Wasserstoffperoxid und feste Persauerstoffverbindungen, die sich in Wasser unter Freisetzung von Wasserstoffperoxid lösen, wie Natriumperborat und Natriumcarbonat-Perhydrat, werden seit langem als Oxidationsmittel zu Desinfektions- und Bleichzwecken verwendet. Die Oxidationswirkung dieser Substanzen hängt in verdünnten Lösungen stark von der Temperatur ab; so erzielt man beispielsweise mit H₂O₂ oder Perborat in alkalischen Bleichflotten erst bei Temperaturen oberhalb von etwa 80 °C eine ausreichend schnelle Bleiche verschmutzter Textilien. Bei niedrigeren Temperaturen kann die Oxidationswirkung der anorganischen Persauerstoffverbindungen durch Zusatz sogenannter Bleichaktivatoren verbessert werden, für die zahlreiche Vorschläge, vor allem aus den Stoffklassen der N- oder O-Acylverbindungen, beispielsweise mehrfach acylierte Alkylendiamine, insbesondere Tetraacetylethylendiamin, acylierte Glykolurile, insbesondere Tetraacetylglykoluril, N-acylierte Hydantoine, Hydrazide, Triazole, Hydrotriazine, Urazole, Diketopiperazine, Sulfurylamide und Cyanurate, außerdem Carbonsäureanhydride, insbesondere Phthalsäureanhydrid, Carbonsäureester, insbesondere Natrium-nonanoyloxy-benzolsulfonat, Natrium-isononanoyloxybenzolsulfonat und acylierte Zuckerderivate, wie Pentaacetylglukose, in der Literatur bekannt geworden sind. Durch Zusatz dieser Substanzen kann die Bleichwirkung wäßriger Peroxidflotten so weit gesteigert werden, daß bereits bei Temperaturen um 60 °C im wesentlichen die gleichen Wirkungen wie mit der Peroxidflotte allein bei 95 °C eintreten.

Im Bemühen um energiesparende Wasch- und Bleichverfahren gewinnen in den letzten Jahren Anwendungstemperaturen deutlich unterhalb 60 °C, insbesondere unterhalb 45 °C bis herunter zur Kaltwassertemperatur an Bedeutung.

Bei diesen niedrigen Temperaturen läßt die Wirkung der bisher bekannten Aktivatorverbindungen in der Regel erkennbar nach. Es hat deshalb nicht an Bestrebungen gefehlt, für diesen Temperaturbereich wirksamere Aktivatoren zu entwickeln, ohne daß bis heute ein überzeugender Erfolg zu verzeichnen gewesen wäre. Ein Ansatzpunkt dazu ergibt sich durch den Einsatz von Übergangsmetallsalzen und -komplexen, wie zum Beispiel in den europäischen Patentanmeldungen EP 392 592, EP 443 651, EP 458 397, EP 544 490 oder EP 549 271 vorgeschlagen, als sogenannte Bleichkatalysatoren. Bei diesen besteht, vermutlich wegen der hohen Reaktivität der aus ihnen und der Persauerstoffverbindung entstehenden oxidierenden Intermediate, die Gefahr der Farbveränderung gefärbter Textilien und im Extremfall der oxidativen Textilschädigung. Aus der europäischen Patentanmeldung EP 630 964 sind bestimmte Mangankomplexe, insbesondere vom Salen-Typ bekannt, welche keinen ausgeprägten Effekt hinsichtlich einer Bleichverstärkung von Persauerstoffverbindungen haben und gefärbte Textilfasern nicht entfärben, aber die Bleiche von in Waschlaugen befindlichem Schmutz oder Farbstoff bewirken können. Die europäische Patentanmeldung EP 408 131 betrifft Bleich- oder Waschverfahren unter Einsatz einer Persauerstoffverbindung und eines ein- oder zweikernigen Cobalt- oder zweikernigen Cobalt-Kupfer-Komplexes mit Salenbeziehungsweise Salenderivat-Liganden. Die nicht vorveröffentlichte europäische Patentanmeldung EP 693 550 betrifft Bleichmittel, die neben einer Persauerstoffverbindung wasserlösliche Mangankomplexe enthalten, die Liganden vom Salen-Typ mit bestimmt substituiertem aromatischen Ring aufweisen können.

Die vorliegende Erfindung hat die Verbesserung der Oxidations- und Bleichwirkung anorganischer Persauerstoffverbindung bei niedrigen Temperaturen unterhalb von 80 °C, insbesondere im Temperaturbereich von ca. 15 °C bis 45 °C, zum Ziel.

Es wurde nun gefunden, daß Übergangsmetallkomplexe, deren Liganden ansonsten den aus Salicylaldehyd und Bisaminen zugänglichen Bis-Schiffschen Basen entsprechen, eine deutlich stärkere bleichkatalysierende Wirkung haben, wenn der sich vom Salicylaldehyd ableitende aromatische Ring elektronenverschiebende Substituenten trägt, und/oder die die N-Atome über brückende Gruppe Modifikationen aufweist.

Gegenstand der Erfindung ist demgemäß die Verwendung von Übergangsmetall(III)-Komplexen der Formel (I), 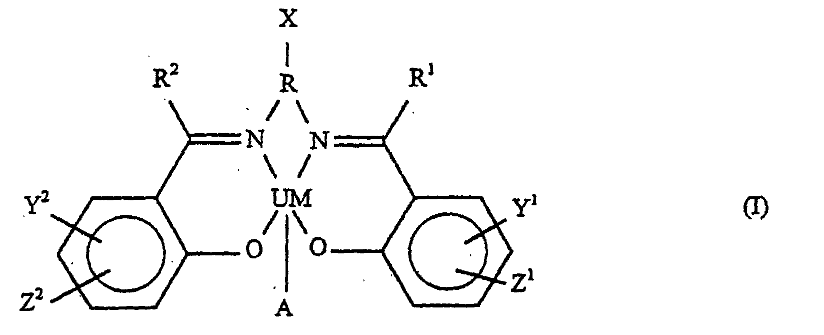 in der
- UM: für Mangan, Eisen, Cobalt, Ruthenium oder Molybdän steht,
- R: für einen Alkylen-, Alkenylen-, Phenylen- oder Cycloalkylenrest steht, welcher zusätzlich zum Substituenten X gegebenfalls alkyl- und/oder arylsubstituiert sein kann, mit insgesamt 1 bis 12 C-Atomen, wobei innerhalb R der kürzeste Abstand zwischen den mit UM komplexierenden N-Atomen 1 bis 5 C-Atome beträgt,
- X: für -H, -OR³, -NO₂, -F, -Cl, -Br oder -J steht,
- R¹ , R² und R³: unabhängig voneinander für Wasserstoff oder einen Alkylrest mit 1 bis 4 C-Atomen stehen,
- Y¹ und Y²: unabhängig voneinander für Wasserstoff oder einen elektronenverschiebenden Substituenten stehen, wobei Y¹ und Y² nicht gleichzeitig Wasserstoff sind, wenn R Alkylen oder Cyclohexlyen ist,
- Z¹ und Z²: unabhängig voneinander für Wasserstoff, -CO₂M, -SO₃M oder -NO₂ stehen,
- M: für Wasserstoff oder ein Alkalimetall wie Lithium, Natrium oder Kalium steht und
- A: für einen ladungsausgleichenden Anionliganden steht,
wobei Z¹ und Z² nicht Wasserstoff sind, wenn Y¹ und/oder Y² ein Alkylrest ist, und Z¹ und Z² nicht -SO₃M sind, wenn Y¹ und/oder Y² ein Alkyl- oder Alkoxyrest mit 1 bis 4 C-Atomen, -NO₂ oder ein Halogen ist, als Aktivatoren für insbesondere anorganische Persauerstoffverbindungen in Oxidations-, Wasch-, Reinigungs- oder Desinfektionslösungen die ein Wasch-, Reinigungs- oder Desinfektionsmittel enthalten, welches 0,2 Gew.-% bis 2 Gew.-% Enzym, ausgewählt aus der Klasse der Proteasen, Lipasen, Cutinasen, Amylasen, Pullulanasen, Cellulasen, Oxidasen und Peroxidasen sowie deren Gemischen, enthält.

Bevorzugtes Übergangsmetall UM in den Verbindungen der Formel (I) ist Mangan.

Zu den bevorzugten Verbindungen gemäß Formel (I) gehören solche, in denen R eine Methylengruppe, 1,2-Ethylengruppe, 1,3-Propylengruppe, in Position 2 hydroxy- oder nitrosubstituierte 1,3-Propylengruppe, 1,2-Cylcloalkylengruppe mit 4 bis 6 C-Atomen, insbesondere eine 1,2-Cyclohexylengruppe, oder eine o-Phenylengruppe ist.

Zu den im Sinne der Erfindung elektronenverschiebenden Substitutenten Y¹ und Y² in Formel (I) gehören die Hydroxygruppe, Alkoxygruppen mit 1 bis 4 C-Atomen, Aryloxgruppen, die Nitrogruppe, Halogene wie Fluor, Chlor, Brom und Jod, die Aminogruppe, welche auch mono- oder dialkyliert oder -aryliert sein kann, lineare oder verzweigtkettige Alkylgruppen mit 1 bis 4 C-Atomen, Cycloalkylgruppen mit 3 bis 6 C-Atomen, lineare oder verzweigtkettige Alkenylgruppen mit 2 bis 5 C-Atomen, und Arylgruppen, welche ihrerseits die vorgenannten Substituenten tragen können. Vorzugsweise weisen die Alkenylgruppen, welche 1 oder 2 C-C-Doppelbindungen enthalten können, mindestens eine Doppelbindung in Konjugation zum Benzolring auf. Zu den bevorzugten Alkenylsubstituenten gehören die Allyl- und die Vinylgruppe. Vorzugsweise stehen die Substituenten Y¹ und Y² in 5-Stellung. Zu den bevorzugt verwendeten Verbindungen gemäß Formel (I) gehören solche, bei denen Y¹ und Y² identisch sind.

Zu den Alkylresten mit 1 bis 4 C-Atomen, insbesondere R¹, R² und R³, gehören insbesondere die Methyl-, Ethyl-, n-Propyl-, iso-Propyl-, n-Butyl-, sec-Butyl-, iso-Butylund tert-Butyl-Gruppe.

Der ladungsausgleichende Anionligand A in den Verbindungen der Formel (I) kann einoder mehrwertig sein, wobei er im letzteren Fall entsprechend mehrere Übergangsmetall-Atome mit den genannten organischen Salen-Liganden neutralisieren kann. Vorzugsweise handelt es sich um ein Halogenid, insbesondere Chlorid, ein Hydroxid, Hexafluorophosphat, Perchlorat oder um das Anion einer Carbonsäure, wie Formiat, Acetat, Benzoat oder Citrat.

Die erfindungsgemaß verwendeten Verbindungen gemäß Formel (I) können nach im Prizip bekannten Verfahren durch die Reaktion von Salicylaldehyd oder entsprechenden Ketonen (wenn R¹ und/oder R² ungleich Wasserstoff), welche gegebenenfalls die oben definierten Substituenten Y¹, Y², Z¹ und/oder Z² am aromatischen Rimg tragen, mit Diaminen H₂N-R(X)-NH₂ und weiterer Umsetzung des so erhältlichen Salen-Liganden mit Übergangsmetallsalzen hergestellt werden, wie dies zum Beispiel in der europäischen Patentanmeldung EP 630 694 oder von B.B. De, B.B. Lohraj, S. Sivaram und P.K. Dhal in Macromolecules 27 (1994), 1291-1296 beschrieben worden ist.

Ein Bleichkatalysator gemäß Formel (I) wird vorzugsweise zum Bleichen von Farbanschmutzungen beim Waschen von Textilien, insbesondere in wäßriger, tensidhaltiger Flotte, verwendet. Die Formulierung "Bleichen von Farbanschmutzungen" ist dabei in ihrer weitesten Bedeutung zu verstehen und umfasst sowohl das Bleichen von auf dem Textil befindlichen Anschmutzungen, das Bleichen von in der Waschflotte befindlichem, vom Textil abgelöstem Schmutz und das oxidative Zerstören von in der Waschflotte befindlichen Textilfarben, die sich unter den Waschbedingungen von Textilien ablösen, bevor sie auf andersfarbige Textilien aufziehen können.

Weitere Gegegenstände der Erfindung sind Wasch-, Reinigungs- und Desinfektionsmittel, die einen oben beschriebenen Bleichkatalysator gemäß Formel (I) enthalten und ein Verfahren zur Aktivierung von Persauerstoffverbindungen unter Einsatz eines derartigen Bleichkatalysators.

Bei dem erfindungsgemäßen Verfahren und im Rahmen einer erfindungsgemäßen Verwendung kann der Bleichkatalysator im Sinne eines Aktivators überall dort eingesetzt werden, wo es auf eine besondere Steigerung der Oxidationswirkung der Persauerstoffverbindungen bei niedrigen Temperaturen ankommt, beispielsweise bei der Bleiche von Textilien oder Haaren, bei der Oxidation organischer oder anorganischer Zwischenprodukte und bei der Desinfektion.

Die erfindungsgemäße Verwendung besteht im wesentlichen darin, Bedingungen zu schaffen, unter denen die Persauerstoffverbindung und der Bleichkatalysator gemäß Formel (I) miteinander reagieren können, mit dem Ziel, stärker oxidierend wirkende Folgeprodukte zu erhalten. Solche Bedingungen liegen insbesondere dann vor, wenn beide Reaktionspartner in wäßriger Lösung aufeinander treffen. Dies kann durch separate Zugabe der Persauerstoffverbindung und des Bleichkatalysators zu einer gegebenenfalls wasch- oder reinigungsmittelhaltigen Lösung geschehen. Besonders vorteilhaft wird das erfindungsgemäße Verfahren jedoch unter Verwendung eines erfindungsgemäßen Wasch-, Reinigungs- oder Desinfektionsmittels, das den Bleichkatalysator und gegebenenfalls ein peroxidisches Oxidationsmittel enthält, durchgeführt. Die Persauerstoffverbindung kann auch separat, in Substanz oder als vorzugsweise wäßrige Lösung oder Suspension, zur Lösung zugegeben werden, wenn ein persauerstofffreies Mittel verwendet wird.

Je nach Verwendungszweck können die Bedingungen weit variiert werden. So kommen neben rein wäßrigen Lösungen auch Mischungen aus Wasser und geeigneten organischen Lösungsmitteln als Reaktionsmedium in Frage. Die Einsatzmengen an Persauerstoffverbindungen werden im allgemeinen so gewählt, daß in den Lösungen zwischen 10 ppm und 10 % Aktivsauerstoff, vorzugsweise zwischen 50 und 5000 ppm Aktivsauerstoff vorhanden sind. Auch die verwendete Menge an Bleichkatalysator hängt vom Anwendungszweck ab. Je nach gewünschtem Aktivierungsgrad werden 0,00001 Mol bis 0,025 Mol, vorzugsweise 0,0001 Mol bis 0,002 Mol Aktivator pro Mol Persauerstoffverbindung verwendet, doch können in besonderen Fällen diese Grenzen auch über- oder unterschritten werden. Im Rahmen des erfindungsgemäßen Verfahrens und der erfindungsgemäßen Verwendung ist es auch möglich, einen Vorläufer der Komplex-Verbindung gemäß Formel (I) in Form eines entsprechenden Komplexes einzusetzen, dem der Ligand A fehlt und in dem das Übergangsmetall eine niedrigere Oxidationsstufe, zum Beispiel +2, aufweist, aus dem sich unter Einwirkung der Persauerstoffverbindung der Komplex gemäß Formel (I) bildet.

Ein erfindungsgemäßes Wasch-, Reinigungs- oder Desinfektionsmittel enthält vorzugsweise 0,0025 Gew.-% bis 0,25 Gew.-%, insbesondere 0,01 Gew.-% bis 0,1 Gew.-% des Bleichkatalysators gemäß Formel (I) neben üblichen, mit dem Bleichkatalysator verträglichen Inhaltsstoffen. Der Bleichkatalysator kann in im Prinzip bekannter Weise an Trägerstoffen adsorbiert und/oder in Hüllsubstanzen eingebettet sein.

Die erfindungsgemäßen Wasch-, Reinigungs- und Desinfektionsmittel, die als insbesondere pulverförmige Feststoffe, homogene Lösungen oder Suspensionen vorliegen können, können außer dem erfindungsgemäß verwendeten Bleichkatalysator im Prinzip alle bekannten und in derartigen Mitteln üblichen Inhaltsstoffe enthalten. Die erfindungsgemäßen Wasch- und Reinigungsmittel können insbesondere Buildersubstanzen, oberflächenaktive Tenside, organische und/oder anorganische Persauerstoffverbindungen, wassermischbare organische Lösungsmittel, Enzyme, Sequestrierungsmittel, Elektrolyte, pH-Regulatoren und weitere Hilfsstoffe, wie zum Beispiel optische Aufheller, Vergrauungsinhibitoren, Farbübertragungsinhibitoren, Schaumregulatoren, zusätzliche Persauerstoff-Aktivatoren sowie Farb- und Duftstoffe, enthalten.

Ein erfindungsgemäßes Desinfektionsmittel kann zur Verstärkung der Desinfektionswirkung gegenüber speziellen Keimen zusätzlich zu den bisher genannten Inhaltsstoffen übliche antimikrobielle Wirkstoffe enthalten. Derartige antimikrobielle Zusatzstoffe sind in den erfindungsgemäßen Desinfektionsmitteln vorzugsweise nicht über 10 Gew.-%, besonders bevorzugt von 0,1 Gew.-% bis 5 Gew.-%, enthalten.

Zusätzlich zu den Bleichkatalysatoren gemäß Formel (I) können, insbesondere in Kombination mit anorganischen Persauerstoffverbindungen, weitere als bleichaktivierende Wirkstoffe bekannte Übergangsmetallsalze beziehungsweise -komplexe und/oder konventionelle Bleichaktivatoren das heißt Verbindungen, die unter Perhydrolysebedingungen gegebenenfalls substituierte Perbenzoesäure und/oder Peroxocarbonsäuren mit 1 bis 10 C-Atomen, insbesondere 2 bis 4 C-Atomen ergeben, eingesetzt werden. Geeignet sind die eingangs zitierten üblichen Bleichaktivatoren, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Glykolurile, insbesondere Tetraacetylglykoluril (TAGU), acylierte Triazinderivate, insbesondere 1,5-Diacetyl-2,4-dioxohexahydro-1,3,5-triazin (DADHT), acylierte Phenylsulfonate, insbesondere Nonanoyl- oder Isononanoyloxybenzolsulfonat, acylierte mehrwertige Alkohole, insbesondere Triacetin, Ethylenglykoldiacetat und 2,5-Diacetoxy-2,5-dihydrofuran sowie acetyliertes Sorbit und Mannit, und acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton. Auch die aus der deutschen Patentanmeldung DE 44 43 177 bekannten Kombinationen konventioneller Bleichaktivatoren können eingesetzt werden.

Die erfindungsgemäßen Mittel können ein oder mehrere Tenside enthalten, wobei insbesondere anionische Tenside, nichtionische Tenside und deren Gemische in Frage kommen. Geeignete nichtionische Tenside sind insbesondere Alkylglykoside und Ethoxylierungs- und/oder Propoxylierungsprodukte von Alkylglykosiden oder linearen oder verzweigten Alkoholen mit jeweils 12 bis 18 C-Atomen im Alkylteil und 3 bis 20, vorzugsweise 4 bis 10 Alkylethergruppen. Weiterhin sind entsprechende Ethoxylierungsund/oder Propoxylierungsprodukte von N-Alkyl-aminen, vicinalen Diolen, Fettsäureestern und Fettsaureamiden, die hinsichtlich des Alkylteils den genannten langkettigen Alkoholderivaten entsprechen, sowie von Alkylphenolen mit 5 bis 12 C-Atomem im Alkylrest brauchbar.

Geeignete anionische Tenside sind insbesondere Seifen und solche, die Sulfat- oder Sulfonat-Gruppen mit bevorzugt Alkaliionen als Kationen enthalten. Verwendbare Seifen sind bevorzugt die Alkalisalze der gesättigten oder ungesättigten Fettsäuren mit 12 bis 18 C-Atomen. Derartige Fettsäuren können auch in nicht vollständig neutralisierter Form eingesetzt werden. Zu den brauchbaren Tensiden des Sulfat-Typs gehören die Salze der Schwefelsäurehalbester von Fettalkoholen mit 12 bis 18 C-Atomen und die Sulfatierungsprodukte der genannten nichtionischen Tenside mit niedrigem Ethoxylierungsgrad. Zu den verwendbaren Tensiden vom Sulfonat-Typ gehören lineare Alkylbenzolsulfonate mit 9 bis 14 C-Atomen im Alkylteil, Alkansulfonate mit 12 bis 18 C-Atomen, sowie Olefinsulfonate mit 12 bis 18 C-Atomen, die bei der Umsetzung entsprechender Monoolefine mit Schwefeltrioxid entstehen, sowie alpha-Sulfofettsäureester, die bei der Sulfonierung von Fettsäuremethyl- oder -ethylestern entstehen.

Derartige Tenside sind in den erfindungsgemäßen Reinigungs- oder Waschmitteln in Mengenanteilen von vorzugsweise 5 Gew.-% bis 50 Gew.-%, insbesondere von 8 Gew.-% bis 30 Gew.-%, enthalten, während die erfindungsgemäßen Desinfektionsmittel vorzugsweise 0,1 Gew.-% bis 20 Gew.-%, insbesondere 0,2 Gew.-% bis 5 Gew.-% Tenside, enthalten.

Als geeignete Persauerstoffverbindungen kommen insbesondere organische Persäuren, Wasserstoffperoxid und unter den Reinigungsbedingungen Wasserstoffperoxid abgebende anorganische Salze, wie Perborat, Percarbonat und/oder Persilikat, in Betracht. Sofern feste Perverbindungen eingesetzt werden sollen, können diese in Form von Pulvern oder Granulaten verwendet werden, die auch in im Prinzip bekannter Weise umhüllt sein können. Die Persauerstoffverbindungen können als solche oder in Form diese enthaltender Mittel, die prinzipiell alle üblichen Wasch-, Reinigungs- oder Desinfektionsmittelbestandteile enthalten können, zu der Reinigungslauge zugegeben werden. Besonders bevorzugt wird Alkalipercarbonat, Alkaliperborat-Monohydrat oder Wasserstoffperoxid in Form wäßriger Lösungen, die 3 Gew.-% bis 10 Gew.-% Wasserstoffperoxid enthalten, eingesetzt. Falls ein erfindungsgemäßes Wasch- oder Reinigungsmittel Persauerstoffverbindungen enthält, sind diese in Mengen von vorzugsweise nicht über 50 Gew.-%, insbesondere von 5 Gew.-% bis 30 Gew.-%, vorhanden, während in den erfindungsgemäßen Desinfektionsmitteln vorzugsweise von 0,5 Gew.-% bis 40 Gew.-%, insbesondere von 5 Gew.-% bis 20 Gew.-%, an Persauerstoffverbindungen enthalten sind.

Ein erfindungsgemäßes Mittel enthält vorzugsweise wasserlöslichen und/oder wasserunlöslichen, organischen und/oder anorganischen Builder. Zu den wasserlöslichen organischen Buildersubstanzen gehören Aminopolycarbonsäuren, insbesondere Nitrilotriessigsäure und Ethylendiamintetraessigsäure, Polyphosphonsäuren, insbesondere Aminotris-(methylenphosphonsäure), Ethylendiamintetrakis-(methylenphosphonsäure) und 1-Hydroxyethan-1,1-diphosphonsäure, Polycarbonsäuren, insbesondere Citronensäure und Zuckersäuren, sowie polymere (Poly-)carbonsäuren, insbesondere die durch Oxidation von Polysacchariden zugänglichen Polycarboxylate der internationalen Patentanmeldung WO 93/16110, polymere Acrylsäuren, Methacrylsäuren, Maleinsäuren und Mischpolymere aus diesen, die auch geringe Anteile polymerisierbarer Substanzen ohne Carbonsäurefunktionalität einpolymerisiert enthalten können. Die relative Molekülmasse der Homopolymeren ungesättiger Carbonsäuren liegt im allgemeinen zwischen 5000 und 200000, die der Copolymeren zwischen 2000 und 200000, vorzugsweise 50000 bis 120000, bezogen auf freie Säure. Ein besonders bevorzugtes Acrylsäure-Maleinsäure-Copolymer weist eine relative Molekülmasse von 50000 bis 100000 auf. Geeignete, wenn auch weniger bevorzugte Verbindungen dieser Klasse sind Copolymere der Acrylsäure oder Methacrylsäure mit Vinylethem, wie Vinylmethylethern, Vinylester, Ethylen, Propylen und Styrol, in denen der Anteil der Säure mindestens 50 Gew.-% beträgt. Als wasserlösliche organische Buildersubstanzen können auch Terpolymere eingesetzt werden, die als Monomere zwei ungesättigte Säuren und/oder deren Salze sowie als drittes Monomer Vinylalkohol und/oder ein Vinylalkohol-Derivat oder ein Kohlenhydrat enthalten. Das erste saure Monomer beziehungsweise dessen Salz leitet sich von einer monoethylenisch ungesättigten C₃-C₈-Carbonsäure und vorzugsweise von einer C₃-C₄-Monocarbonsäure, insbesondere von (Meth-)acrylsäure ab. Das zweite saure Monomer beziehungsweise dessen Salz kann ein Derivat einer C₄-C₈-Dicarbonsäure, vorzugsweise einer C₄-C₈-Dicarbonsäure sein, wobei Maleinsäure besonders bevorzugt ist. Die dritte monomere Einheit wird in diesem Fall von Vinylalkohol und/oder vorzugsweise einem veresterten Vinylalkohol gebildet. Insbesondere sind Vinylalkohol-Derivate bevorzugt, welche einen Ester aus kurzkettigen Carbonsäuren, beispielsweise von C₁-C₄-Carbonsäuren, mit Vinylalkohol darstellen. Bevorzugte Terpolymere enthalten dabei 60 Gew.-% bis 95 Gew.-%, insbesondere 70 Gew.-% bis 90 Gew.-% (Meth)acrylsaure bzw. (Meth)acrylat, besonders bevorzugt Acrylsäure bzw. Acrylat, und Maleinsäure bzw. Maleat sowie 5 Gew.-% bis 40 Gew.-%, vorzugsweise 10 Gew.-% bis 30 Gew.-% Vinylalkohol und/oder Vinylacetat. Ganz besonders bevorzugt sind dabei Terpolymere, in denen das Gewichtsverhältnis von (Meth)acrylsäure beziehungsweise (Meth)acrylat zu Maleinsäure beziehungsweise Maleat zwischen 1:1 und 4:1, vorzugsweise zwischen 2:1 und 3:1 und insbesondere 2:1 und 2,5:1 liegt. Dabei sind sowohl die Mengen als auch die Gewichtsverhältnisse auf die Säuren bezogen. Das zweite saure Monomer beziehungsweise dessen Salz kann auch ein Derivat einer Allylsulfonsäure sein, die in 2-Stellung mit einem Alkylrest, vorzugsweise mit einem C₁-C₄-Alkylrest, oder einem aromatischen Rest, der sich vorzugsweise von Benzol oder Benzol-Derivaten ableitet, substituiert ist. Bevorzugte Terpolymere enthalten dabei 40 Gew.-% bis 60 Gew.-%, insbesondere 45 bis 55 Gew.-% (Meth)acrylsäure beziehungsweise (Meth)acrylat, besonders bevorzugt Acrylsäure beziehungsweise Acrylat, 10 Gew.-% bis 30 Gew.-%, vorzugsweise 15 Gew.-% bis 25 Gew.-% Methallylsulfonsäure bzw. Methallylsulfonat und als drittes Monomer 15 Gew.-% bis 40 Gew.-%, vorzugsweise 20 Gew.-% bis 40 Gew.-% eines Kohlenhydrats. Dieses Kohlenhydrat kann dabei beispielsweise ein Mono-, Di-, Oligo- oder Polysaccharid sein, wobei Mono-, Dioder Oligosaccharide bevorzugt sind, besonders bevorzugt ist Saccharose. Durch den Einsatz des dritten Monomers werden vermutlich Sollbruchstellen in das Polymer eingebaut, die für die gute biologische Abbaubarkeit des Polymers verantwortlich sind. Diese Terpolymere lassen sich insbesondere nach Verfahren herstellen, die in der deutschen Patentschrift DE 42 21 381 und der deutschen Patentanmeldung DE 43 00 772 beschrieben sind, und weisen im allgemeinen eine relative Molekülmasse zwischen 1000 und 200000, vorzugsweise zwischen 200 und 50000 und insbesondere zwischen 3000 und 10000 auf. Sie können, insbesondere zur Herstellung flüssiger Mittel, in Form wäßriger Lösungen, vorzugsweise in Form 30- bis 50-gewichtsprozentiger wäßriger Lösungen eingesetzt werden. Alle genannten Säuren werden in der Regel in Form ihrer wasserlöslichen Salze, insbesondere ihre Alkalisalze, eingesetzt.

Derartige organische Buildersubstanzen können gewünschtenfalls in Mengen bis zu 40 Gew.-%, insbesondere bis zu 25 Gew.-% und vorzugsweise von 1 Gew.-% bis 8 Gew.-% enthalten sein. Mengen nahe der genannten Obergrenze werden vorzugsweise in pastenförmigen oder flüssigen, insbesondere wasserhaltigen, erfindungsgemäßen Mitteln eingesetzt.

Als wasserlösliche anorganische Buildermaterialien kommen insbesondere Polyphosphate, vorzugsweise Natriumtripolyphosphat, in Betracht. Als wasserunlösliche, wasserdispergierbare anorganische Buildermaterialien werden insbesondere kristalline oder amorphe Alkalialumosilikate, in Mengen von bis zu 50 Gew.-%, vorzugsweise nicht über 40 Gew.-% und in flüssigen Mitteln insbesondere von 1 Gew.-% bis 5 Gew.-%, eingesetzt. Unter diesen sind die kristallinen Natriumalumosilikate in Waschmittelqualität, insbesondere Zeolith A, P und gegebenenfalls X, bevorzugt. Mengen nahe der genannten Obergrenze werden vorzugsweise in festen, teilchenförmigen Mitteln eingesetzt. Geeignete Alumosilikate weisen insbesondere keine Teilchen mit einer Korngröße über 30 µm auf und bestehen vorzugsweise zu wenigstens 80 Gew.-% aus Teilchen mit einer Größe unter 10 µm. Ihr Calciumbindevermögen, das nach den Angaben der deutschen Patentschrift DE 24 12 837 bestimmt werden kann, liegt in der Regel im Bereich von 100 bis 200 mg CaO pro Gramm.

Geeignete Substitute beziehungsweise Teilsubstitute für das genannte Alumosilikat sind kristalline Alkalisilikate, die allein oder im Gemisch mit amorphen Silikaten vorliegen können. Die in den erfindungsgemäßen Mitteln als Gerüststoffe brauchbaren Alkalisilikate weisen vorzugsweise ein molares Verhältnis von Alkalioxid zu SiO₂ unter 0,95, insbesondere von 1:1,1 bis 1:12 auf und können amorph oder kristallin vorliegen. Bevorzugte Alkalisilikate sind die Natriumsilikate, insbesondere die amorphen Natriumsilikate, mit einem molaren Verhältnis Na₂O:SiO₂ von 1:2 bis 1:2,8. Derartige amorphe Alkalisilikate sind beispielsweise unter dem Namen Portil® im Handel erhältlich. Solche mit einem molaren Verhältnis Na₂O:SiO₂ von 1:1,9 bis 1:2,8 können nach dem Verfahren der europäischen Patentanmeldung EP 0 425 427 hergestellt werden. Sie werden im Rahmen der Herstellung erfindungsgemäßer Mittel bevorzugt als Feststoff und nicht in Form einer Lösung zugegeben. Als kristalline Silikate, die allein oder im Gemisch mit amorphen Silikaten vorliegen können, werden vorzugsweise kristalline Schichtsilikate der allgemeinen Formel Na₂SiₓO₂ₓ₊₁ · yH₂O eingesetzt, in der x, das sogenannte Modul, eine Zahl von 1,9 bis 4 und y eine Zahl von 0 bis 20 ist und bevorzugte Werte für x 2, 3 oder 4 sind. Kristalline Schichtsilikate, die unter diese allgemeine Formel fallen, werden beispielsweise in der europäischen Patentanmeldung EP 0 164 514 beschrieben. Bevorzugte kristalline Schichtsilikate sind solche, bei denen x in der genannten allgemeinen Formel die Werte 2 oder 3 annimmt. Insbesondere sind sowohl β- als auch δ-Natriumdisilikate (Na₂Si₂O₅·yH₂O) bevorzugt, wobei β-Natriumdisilikat beispielsweise nach dem Verfahren erhalten werden kann, das in der internationalen Patentanmeldung WO 91/08171 beschrieben ist. δ-Natriumsilikate mit einem Modul zwischen 1,9 und 3,2 können gemäß den japanischen Patentanmeldungen JP 04/238 809 oder JP 04/260 610 hergestellt werden. Auch aus amorphen Alkalisilikaten hergestellte, praktisch wasserfreie kristalline Alkalisilikate der obengenannten allgemeinen Formel, in der x eine Zahl von 1,9 bis 2,1 bedeutet, herstellbar wie in den europäischen Patentanmeldungen EP 0 548 599, EP 0 502 325 und EP 0 452 428 beschrieben, können in erfindungsgemäßen Mitteln eingesetzt werden. In einer weiteren bevorzugten Ausführungsform erfindungsgemäßer Mittel wird ein kristallines Natriumschichtsilikat mit einem Modul von 2 bis 3 eingesetzt, wie es nach dem Verfahren der europäischen Patentanmeldung EP 0 436 835 aus Sand und Soda hergestellt werden kann. Kristalline Natriumsilikate mit einem Modul im Bereich von 1,9 bis 3,5, wie sie nach den Verfahren der europäischen Patentschriften EP 0 164 552 und/oder BP 0 293 753 erhältlich sind, werden in einer weiteren bevorzugten Ausführungsform erfindungsgemäßer Mittel eingesetzt. Falls als zusätzliche Buildersubstanz auch Alkalialumosilikat, insbesondere Zeolith, vorhanden ist, beträgt das Gewichtsverhältnis Alumosilikat zu Silikat, jeweils bezogen auf wasserfreie Aktivsubstanzen, vorzugsweise 4:1 bis 10:1. In Mitteln, die sowohl amorphe als auch kristalline Alkalisilikate enthalten, beträgt das Gewichtsverhältnis von amorphem Alkalisilikat zu kristallinem Alkalisilikat vorzugsweise 1:2 bis 2:1 und insbesondere 1:1 bis 2:1.

Buildersubstanzen sind in den erfindungsgemäßen Wasch- oder Reinigungsmitteln vorzugsweise in Mengen bis zu 60 Gew.-%, insbesondere von 5 Gew.-% bis 40 Gew.-%, enthalten, während die erfindungsgemäßen Desinfektionsmittel vorzugsweise frei von den lediglich die Komponenten der Wasserhärte komplexierenden Buildersubstanzen sind und bevorzugt nicht über 20 Gew.-%, insbesondere von 0,1 Gew.-% bis 5 Gew.-%, an schwermetallkomplexierenden Stoffen, vorzugsweise aus der Gruppe umfassend Aminopolycarbonsäuren, Aminopolyphosphonsäuren und Hydroxypolyphosphonsäuren und deren wasserlösliche Salze sowie deren Gemische, enthalten.

Als Enzyme kommen solche aus der Klasse der Proteasen, Lipasen, Cutinasen, Amylasen, Pullulanasen, Cellulasen, Oxidasen und Peroxidasen sowie deren Gemische in Frage. Besonders geeignet sind aus Pilzen oder Bakterien, wie Bacillus subtilis, Bacillus licheniformis, Streptomyces griseus; Humicola lanuginosa, Humicola insolens, Pseudomonas pseudoalcaligenes oder Pseudomonas cepacia gewonnene enzymatische Wirkstoffe. Die Enzyme können, wie zum Beispiel in den internationalen Patentanmeldungen WO 92/11347 oder WO 94/23005 beschrieben, an Trägerstoffen adsorbiert und/oder in Hüllsubstanzen eingebettet sein, um sie gegen vorzeitige Inaktivierung zu schützen. Sie sind in den erfindungsgemäßen Wasch-, Reinigungsund Desinfektionsmitteln in Mengen von 0.2 Gew.% bis 2 Gew.-%, insbesondere von 0,2 Gew.-% bis 0,7 Gew.-%, enthalten.

Zu den in den erfindungsgemäßen Mitteln, insbesondere wenn sie in flüssiger oder pastöser Form vorliegen, verwendbaren organischen Lösungsmitteln gehören Alkohole mit 1 bis 4 C-Atomen, insbesondere Methanol, Ethanol, Isopropanol und tert.-Butanol, Diole mit 2 bis 4 C-Atomen, insbesondere Ethylenglykol und Propylenglykol, sowie deren Gemische und die aus den genannten Verbindungsklassen ableitbaren Ether. Derartige wassermischbare Lösungsmittel sind in den erfindungsgemäßen Wasch-, Reinigungs- und Desinfektionsmitteln vorzugsweise nicht über 30 Gew.-%, insbesondere von 6 Gew.-% bis 20 Gew.-%, vorhanden.

Zur Einstellung eines gewünschten, sich durch die Mischung der übrigen Komponenten nicht von selbst ergebenden pH-Werts können die erfindungsgemäßen Mittel system- und umweltverträgliche Säuren, insbesondere Citronensäure, Essigsäure, Weinsäure, Äpfelsäure, Milchsäure, Glykolsäure, Bernsteinsäure, Glutarsäure und/oder Adipinsäure, aber auch Mineralsäuren, insbesondere Schwefelsäure, oder Basen, insbesondere Ammoniumoder Alkalihydroxide, enthalten. Derartige pH-Regulatoren sind in den erfindungsgemäßen Mitteln vorzugsweise nicht über 20 Gew.-%, insbesondere von 1,2 Gew.-% bis 17 Gew.-%, enthalten.

Die Herstellung der erfindungsgemäßen festen Mittel bietet keine Schwierigkeiten und kann in im Prinzip bekannter Weise, zum Beispiel durch Sprühtrocknen oder Granulation, erfolgen, wobei Persauerstoffverbindung und Bleichkatalysator gegebenenfalls später zugesetzt werden. Zur Herstellung erfindungsgemäßer Mittel mit erhöhtem Schüttgewicht, insbesondere im Bereich von 650 g/l bis 950 g/l, ist ein aus der europäischen Patentschrift EP 486 592 bekanntes, einen Extrusionschritt aufweisendes Verfahren bevorzugt. Erfindungsgemäße Wasch-, Reinigungs- oder Desinfektionsmittel in Form wäßriger oder sonstige übliche Lösungsmittel enthaltender Lösungen werden besonders vorteilhaft durch einfaches Mischen der Inhaltsstoffe, die in Substanz oder als Lösung in einen automatischen Mischer gegeben werden können, hergestellt.

### Beispiele

### Beispiel 1

In einer Lösung, die 2,5 mg Morin in 99,5 ml vollentsalztem Wassser enthielt, wurden 98 mg Natriumperborat-Monohydrat gelöst. Der pH-Wert wurde auf 9,5 eingestellt und mit Hilfe eines pH-Stat-Gerätes während der gesamten nachfolgenden Meßdauer bei diesem Wert gehalten. Ebenso wurde die Temperatur konstant bei 20 °C gehalten. 0,5 ml einer Lösung, die den zu testenden Bleichkatalysator in einer Konzentration von 50 ppm bezogen auf Übergangsmetall (Mn) enthielt, wurden zugesetzt. Über einen Zeitraum von 30 Minuten wurde minütlich die Extinktion E der Lösung bei 400 nm gemessen. In der nachfolgenden Tabelle sind die Werte für die prozentuale Entfärbung D(t), berechnet nach D(t) = [E(0) - E(t)] / E(0) * 100, angegeben.

Getestet wurden die nach bekannten Verfahren hergestellten Komplexe [N,N'-Bis[(2-hydroxy-5-vinylphenyl)-methylen]-1,2-diaminocyclohexan]-mangan-(III)-chlorid **(E1;** Formel (I) mit UM = Mn, R = 1,2-Cyclohexylen, Y¹ = Y² = Vinyl, R¹ = R² = X = Z¹ = Z² = H, A = Cl), [N,N'-Bis[(2-hydroxy-5-nitrophenyl)-methylen]-1,2-diaminocyclohexan]-mangan-(III)-acetat **(E2;** Formel (I) mit UM = Mn, R = 1,2-Cyclohexylen, Y¹ = Y² = NO₂, R¹ = R² = X = Z¹ = Z² = H, A = Acetat) und [N,N'-Bis[(2-hydroxyphenyl)-methylen]-1,2-phenylendiamin]-mangan-(III)-acetat **(E3;** Formel (I) mit UM = Mn, R = 1,2-Phenylen, Y¹ = Y² = R¹ = R² = X = Z¹ = Z² = H, A = Acetat) im Sinne der Erfindung sowie zum Vergleich [N,N'-Bis[(2-hydroxyphenyl)-methylen]-1,2-diaminocyclohexan]-mangan-(III)-chlorid **(V1),** [N,N'-Bis[(2-hydroxyphenyl)-methylen]-1,2-diaminoethan]-mangan-(III)-chlorid **(V2)** und [N,N'-Bis[(2-hydroxy-5-sulfonatophenyl)-methylen]-1,2-diaminoethan]-mangan-(III)-chlorid **(V3).** Außerdem wurde der herkömmliche Bleichaktivator N,N,N',N'-Tetraacetyl-ethylendiamin (TAED) unter ansonsten gleichen Bedingungen, aber in einer Konzentration von 6 Gew.-%, ebenfalls gestestet **(V4)**.

**Tabelle 1:**

| Prozentuale Entfärbung in Abhängigkeit der Zeit | | | |
|---|---|---|---|
| Substanz | 8 Minuten | 15 Minuten | 30 Minuten |
| **E1** | 64 | 75 | 88 |
| **E2** | 69^{a)} | 82 | 87^{b)} |
| **E3** | 86^{a)} | 91 | 91^{b)} |
| **V1** | 31 | 44 | 58 |
| **V2** | 33 | 39 | 48 |
| **V3** | 37 | 42 | 53 |
| **V4** | 35 | 63 | 84 |

| | | | |
|---|---|---|---|
| ^{a)} Wert nach 5 Minuten | | | |
| ^{b)} Wert nach 28 Minuten | | | |

Man erkennt, daß durch die erfindungsgemäßen Verwendungen **(E1** bis **E3)** eine signifikant bessere Bleichwirkung erreicht werden kann als durch den konventionellen Bleichaktivator TAED in wesentlich höherer Konzentration **(V4)** und als bei Verwendung der aus EP 630 964 bekannten ähnlichen Komplexverbindungen **(V1** bis **V3).**

### Beispiel 2

In einem Launderometer wurden unter Verwendung eines bleichaktivatorfreien Waschmittels **B1,** enthaltend 16 Gew.-% Natriumperborat-Monohydrat, ein mit Currysauce-Öl verunreinigtes Gewebe aus weißer Baumwolle bei 30 °C 30 Minuten gewaschen. Nach Spülen und Trocknen wurde die Remission (Meßwellenlänge 460 nm) des augenscheinlich sauberen Testgewebes photometrisch bestimmt. Zusätzlich wurde in gleicher Dosierung ein Mittel **B2,** das 6 Gew.-% TAED und 94 Gew.-% **B1** enthielt, unter den gleichen Bedingungen getestet. Den aus diesen Vergleichsversuchen erhaltenen Werten ist der unter Einsatz eines Mittels, das **B1** und den Komplex **E1** in einer Konzentration von 25 ppm bezogen auf Mangan enthielt (**M1**), klar überlegen (Tabelle 2).

**Tabelle 2:**

| Remissionswerte [%] | |
|---|---|
| Mittel | Remission |
| **B1** | 48,1 |
| **B2** | 47,0 |
| **M1** | 51,0 |

## Patentansprüche

1. Verwendung von Übergangsmetall(III)-Komplexen der Formel (I), 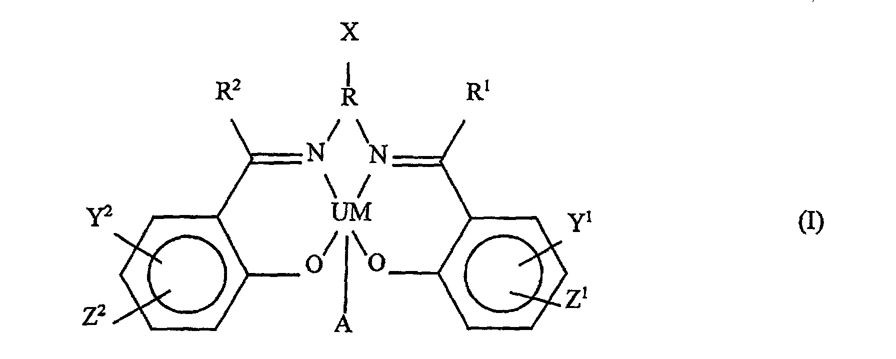 in der
UM Mangan, Eisen, Cobalt, Ruthenium oder Molybdän ist,
R für einen Alkylen-, Alkenylen-, Phenylen- oder Cycloalkylenrest steht, welcher gegebenfalls alkyl- und/oder arylsubstituiert sein kann, mit insgesamt 1 bis 12 C-Atomen, wobei innerhalb R der kürzeste Abstand zwischen den mit UM komplexierenden N-Atomen 1 bis 5 C-Atome beträgt,
X für -H, -OR³, -NO₂, -F, -Cl, -Br oder -J steht,
R¹, R² und R³ unabhängig voneinander für Wasserstoff oder einen Alkylrest mit 1 bis 4 C-Atomen stehen,
Y¹ und Y² unabhängig voneinander für Wasserstoff oder einen elektronenverschiebenden Substituenten stehen, wobei Y¹ und Y² nicht gleichzeitig Wasserstoff sind, wenn R Alkylen oder Cyclohexlyen ist,
Z¹ und Z² unabhängig voneinander für Wasserstoff, -CO₂M, -SO₃M oder -NO₂ stehen,
M für Wasserstoff oder ein Alkalimetall steht und
A für einen ladungsausgleichenden Anionliganden steht,
wobei Z¹ und Z² nicht Wasserstoff sind, wenn Y¹ und/oder Y² ein Alkylrest ist, und Z¹ und Z² nicht -SO₃M sind, wenn Y¹ und/oder Y² ein Alkyl- oder Alkoxyrest mit 1 bis 4 C-Atomen, -NO₂ oder ein Halogen ist, als Aktivatoren für Persauerstoffverbindungen in Oxidations-, Wasch-, Reinigungsoder Desinfektionslösungen, die ein Wasch-, Reinigungs- oder Desinfektionsmittel enthalten, welches 0,2 Gew.-% bis 2 Gew.-% Enzym, ausgewählt aus der Klasse der Proteasen, Lipasen, Cutinasen, Amylasen, Pullulanasen, Cellulasen, Oxidasen und Peroxidasen sowie deren Gemischen, enthält.

2. Verwendung nach Anspruch 1, **dadurch gekennzeichnet, daß** das Übergangsmetall UM im Komplex der Formel (I) Mangan ist.

3. Verwendung nach Anspruch 1 oder 2, **dadurch gekennzeichnet, daß** R in Formel (I) eine Methylengruppe, 1,2-Ethylengruppe, 1,3-Propylengruppe, in Position 2 hydroxy- oder nitrosubstituierte 1,3-Propylengruppe, 1,2-Cylcloalkylengruppe mit 4 bis 6 C-Atomen, insbesondere eine 1,2-Cyclohexylengruppe, oder eine o-Phenylengruppe ist.

4. Verwendung nach einem der Ansprüche 1 bis 3, **dadurch gekennzeichnet, daß** Y¹ und Y² in Formel (I) unter der Hydroxygruppe, Alkoxygruppen mit 1 bis 4 C-Atomen, Aryloxygruppen, der Nitrogruppe, den Halogenen, der Aminogruppe, welche auch mono- oder dialkyliert oder -aryliert sein kann, den linearen oder verzweigtkettigen Alkylgruppen mit 1 bis 4 C-Atomen, Cycloalkylgruppen mit 3 bis 6 C-Atomen, linearen oder verzweigtkettigen Alkenylgruppen mit 2 bis 5 C-Atomen, und Arylgruppen, welche ihrerseits die vorgenannten Substituenten tragen können, ausgewählt werden.

5. Verwendung nach einem der Ansprüche 1 bis 4, **dadurch gekennzeichnet, daß** Y¹ und Y² in Formel (I) unter den Alkenylgruppen, welche 1 oder 2 C-C-Doppelbindungen enthalten, wobei mindestens eine Doppelbindung in Konjugation zum Benzolring steht, ausgewählt werden.

6. Verwendung nach Anspruch 5, **dadurch gekennzeichnet, daß** die Alkenylgruppe die Allyl- oder Vinylgruppe ist.

7. Verwendung nach einem der Ansprüche 1 bis 6, **dadurch gekennzeichnet, daß** in den Verbindungen der Formel (I) die Substituenten Y¹ und Y² in 5-Stellung stehen und/oder identisch sind.

8. Verwendung nach einem der Ansprüche 1 bis 7, **dadurch gekennzeichnet, daß** der ladungsausgleichende Anionligand A in den Verbindungen der Formel (I) ein- oder mehrwertig ist, wobei er im letzteren Fall entsprechend mehrere Übergangsmetallatome mit den Salen-Ligande neutralisiert, und insbesondere ein Halogenid, ein Hydroxid, Hexafluorophosphat, Perchlorat oder das Anion einer Carbonsäure ist.

9. Verwendung nach einem der Ansprüche 1 bis 8, **dadurch gekennzeichnet, daß** R¹, R² und R³ unabhängig voneinander aus den Methyl-, Ethyl-, n-Propyl-, iso-Propyl-, n-Butyl-, sec-Butyl- iso-Butyl- und tert-Butyl-Gruppen ausgewählt werden

10. Verwendung nach einem der Ansprüche 1 bis 9, **dadurch gekennzeichnet, daß** die zu aktivierende Persauerstoffverbindung aus der Gruppe umfassend organische Persäuren, Wasserstoffperoxid, Perborat und Percarbonat sowie deren Gemische ausgewählt wird.

11. Wasch-, Reinigungs- oder Desinfektionsmittel, **dadurch gekennzeichnet, daß** es 0,0025 Gew.-% bis 0,25 Gew.-%, insbesondere 0,01 Gew.-% bis 0,1 Gew.-% eines Bleichkatalysators gemäß Formel (I) und 0,2 Gew.-% bis 2 Gew.-% Enzym, ausgewählt aus der Klasse der Proteasen, Lipasen, Cutinasen, Amylasen, Pullulanasen, Cellulasen, Oxidasen und Peroxidasen sowie deren Gemischen, neben üblichen, mit dem Bleichkatalysator verträglichen Inhaltsstoffen enthält.

12. Waschmittel nach Anspruch 11, **dadurch gekennzeichnet, daß** es
5 - 50 Gew.-%, insbesondere 8 - 30 Gew.-% anionisches und/oder nichtionisches Tensid,
bis zu 60 Gew.-%, insbesondere 5 - 40 Gew.-% Buildersubstanz,
0,2 - 0,7 Gew.-%, Enzym,
bis zu 30 Gew.-%, insbesondere 6 - 20 Gew.-%, organisches Lösungsmittel aus der Gruppe umfassend Alkohole mit 1 bis 4 C-Atomen, Diole mit 2 bis 4 C-Atomen sowie deren Gemische und die aus diesen Verbindungsklassen ableitbaren Ether, und
bis zu 20 Gew.-%, insbesondere 1,2- 17 Gew.-% pH-Regulator,
enthält.

13. Waschmittel nach Anspruch 12, **dadurch gekennzeichnet, daß** es zusätzlich zu den genannten Bestandteilen nicht über 50 Gew.-%, insbesondere von 5 Gew.-% bis 30 Gew.-% Persauerstoffverbindung, ausgewählt aus der Gruppe umfassend Wasserstoffperoxid, Perborat und Percarbonat sowie deren Gemische, enthält.

## Claims

1. The use of transition metal (III) complexes corresponding to formula (I): 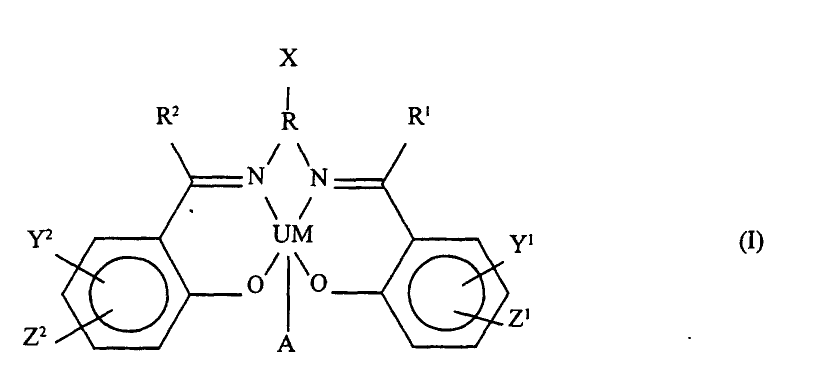 in which
UM stands for manganese, iron, cobalt, ruthenium or molybdenum,
R is an alkylene, alkenylene, phenylene or cycloalkylene group which may optionally be alkyl- and/or aryl-substituted and which has a total of 1 to 12 carbon atoms, the shortest distance in R between the N atoms complexing with UM being 1 to 5 carbon atoms,
X stands for -H, -OR³, -NO₂, -F, -Cl, -Br or -I,
R¹ , R² and R³ independently of one another represent hydrogen or an alkyl group containing 1 to 4 carbon atoms,
Y¹ and Y² independently of one another represent hydrogen or an electron-shifting substituent, Y¹ and Y² not both being hydrogen where R is alkylene or cyclohexylene,
Z¹ and Z² independently of one another represent hydrogen, -CO₂M, -SO₃M or -NO₂,
M stands for hydrogen or an alkali metal and
A is a charge-compensating anion ligand,
Z¹ and Z² not being hydrogen where Y¹ and/or Y² is/are an alkyl group and Z¹ and Z² not being -SO₃M where Y¹ and/or Y² is/are an alkyl or alkoxy group containing 1 to 4 carbon atoms, -NO₂ or a halogen,
as activators for peroxygen compounds in oxidation, washing, cleaning or disinfecting solutions which contain a detergent, cleaner or disinfectant containing 0.2% by weight to 2% by weight of enzyme selected from the class of proteases, lipases, cutinases, amylases, pullulanases, cellulases, oxidases and peroxidases and mixtures thereof.

2. The use claimed in claim 1, **characterized in that** the transition metal UM in the complex of formula (I) is manganese.

3. The use claimed in claim 1 or 2, **characterized in that** R in formula (I) is a methylene group, a 1,2-ethylene group, a 1,3-propylene group, a 2-hydroxy- or 2-nitrosubstituted 1,3-propylene group, a 1,2-cycloalkylene group containing 4 to 6 carbon atoms, more particularly a 1,2-cyclohexylene group, or an o-phenylene group.

4. The use claimed in any of claims 1 to 3, **characterized in that** Y¹ and Y² in formula (I) are selected from the hydroxy group, alkoxy groups containing 1 to 4 carbon atoms, aryloxy groups, the nitro group, the halogens, the amino group, which may even be mono- or dialkylated or mono- or diarylated, the linear or branched alkyl groups containing 1 to 4 carbon atoms, cycloalkyl groups containing 3 to 6 carbon atoms, linear or branched alkenyl groups containing 2 to 5 carbon atoms and aryl groups which in turn may carry the substituents mentioned above.

5. The use claimed in any of claims 1 to 4, **characterized in that** Y¹ and Y² in formula (I) are selected from alkenyl groups containing one or two C-C double bonds, at least one double bond being conjugated with the benzene ring.

6. The use claimed in claim 5, **characterized in that** the alkenyl group is the allyl or vinyl group.

7. The use claimed in any of claims 1 to 6, **characterized in that** the substituents Y¹ and Y² in the compounds of formula (I) are in the 5-position and/or are identical.

8. The use claimed in any of claims 1 to 7, **characterized in that** the charge-compensating anion ligand A in the compounds of formula (I) is mono- or polyvalent; in the latter case, it correspondingly neutralizes several transition metal atoms containing the salen ligands, and in particular is a halide, a hydroxide, hexafluorophosphate, perchlorate or the anion of a carboxylic acid.

9. The use claimed in any of claims 1 to 8, **characterized in that** R¹, R² and R³ independently of one another are selected from the methyl, ethyl, n-propyl, isopropyl, n-butyl, sec. butyl, isobutyl and tert.butyl groups.

10. The use claimed in any of claims 1 to 9, **characterized in that** the peroxygen compound to be activated is selected from the group consisting of organic per acids, hydrogen peroxide, perborate and percarbonate and mixtures thereof.

11. A detergent, cleaner or disinfectant, **characterized in that** it contains 0.0025% by weight to 0.25% by weight and more particularly 0.01% by weight to 0.1% by weight of a bleach catalyst corresponding to formula (I) and 0.2% by weight to 2% by weight of an enzyme selected from the class of proteases, lipases, cutinases, amylases, pullulanases, cellulases, oxidases and peroxidases and mixtures thereof besides typical ingredients compatible with the bleach catalyst.

12. A detergent as claimed in claim 11, **characterized in that** it contains 5 to 50% by weight and more particularly 8 to 30% by weight of anionic and/or nonionic surfactant,
up to 60% by weight and more particularly 5 to 40% by weight of builder,
0.2 to 0.7% by weight of enzyme,
up to 30% by weight and more particularly 6 to 20% by weight of organic solvent from the group consisting of C₁₋₄ alcohols, C₂₋₄ diols and mixtures thereof and the ethers derivable from these classes of compounds and
up to 20% by weight and more particularly 1.2 to17% by weight of pH adjuster.

13. A detergent as claimed in claim 12, **characterized in that**, in addition to the constituents mentioned, it contains not more than 50% by weight and more particularly 5% by weight to 30% by weight of peroxygen compound selected from the group consisting of hydrogen peroxide, perborate and percarbonate and mixtures thereof.

## Revendications

1. Utilisation de complexes de métal de transition (III) de formule (I) 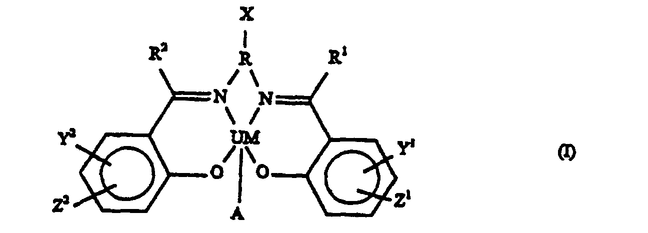 dans laquelle
UM est du manganèse, du fer, du cobalt, du ruthénium ou du molybdène,
R représente un reste alkylène, alkénylène, phénylène, cycloalkylène qui peut être éventuellement substitué par un alkyle et/ou un aryle, ayant au total de 1 à 12 atomes de carbone, dans lequel à l'intérieur de R la distance la plus courte entre les atomes de N qui sont complexés avec UM s'élève à 1 à 5 atomes de carbone,
X représente -H, -OR³, -NO₂, -F, -Cl, -Br ou -I
R¹, R² et R³ indépendamment l'un de l'autre représentent de l'hydrogène ou un reste alkyle ayant de 1 à 4 atomes de carbone,
Y¹ et Y² indépendamment l'un de l'autre représentent de l'hydrogène ou un substituant qui décale les électrons dans lesquels Y¹ et Y² ne sont pas simultanément de l'hydrogène lorsque R est un alkylène ou un cyclohexylène,
Z¹ et Z² indépendamment l'un de l'autre représentent de l'hydrogène, -CO₂M, -SO₃M ou -NO₂,
M représente de l'hydrogène ou un métal alcalin et
A représente un ligand anionique qui compense la charge,
dans laquelle Z¹ et Z² ne sont pas de l'hydrogène quand Y¹ et/ou Y² sont un reste alkyle et Z¹ et Z² ne sont pas -SO₃M lorsque Y¹ et/ou Y² sont un reste alkyle ou alkoxy ayant de 1 à 4 atomes de carbone, NO₂ ou un halogène,
en tant qu'activateurs pour des composés peroxygénés dans des solutions d'oxydation, de lavage, de nettoyage, ou de désinfection qui renferment un produit de lavage, de nettoyage ou de désinfection qui contient de 0,2 % en poids à 2 % en poids d'enzyme choisi dans la classe des protéases, des lipases, des cutinases, des amylases, des pullulanases, des cellulases, des oxydases et des peroxydases ou de leurs mélanges.

2. Utilisation selon la revendication 1,
**caractérisée en ce que**
le métal de transition UM dans le complexe de formule (I) est le manganèse.

3. Utilisation selon l'une quelconque des revendications 1 ou 2,
**caractérisée en ce que**
R dans la formule (I) est un groupe méthylène un groupe 1,2-éthylène, un groupe 1,3-propylène, un groupe 1,3-propylène substitué en position 2 par un hydroxy ou un nitro, un groupe 1,2-cycloalkylène ayant de 4 à 6 atomes de carbone, en particulier un groupe 1,2-cyclohexylène ou un groupe o-phénylène.

4. Utilisation selon l'une quelconque des revendications 1 à 3,
**caractérisée en ce que**
Y¹ et Y² dans la formule (I) sont choisis parmi les groupes hydroxy, les groupes alkoxy ayant de 1 à 4 atomes de carbone, les groupes aryloxy, les groupes nitro, les halogènes, les groupes amine, qui peuvent également être mono- ou dialkylés ou arylés, les groupes alkyle linéaires ou à chaîne ramifiée ayant de 1 à 4 atomes de carbone, des groupes cycloalkyle ayant de 3 à 6 atomes de carbone, des groupes alkényle linéaires ou à chaîne ramifiée ayant de 2 à 5 atomes de carbone et des groupes aryle qui peuvent porter de leur côté les substituants précités.

5. Utilisation selon l'une quelconque des revendications 1 à 4,
**caractérisée en ce que**
Y¹ et Y² dans la formule (I) son choisis parmi les groupes alkényle qui renferment 1 ou 2 double liaison C-C, dans lesquels au moins une double liaison est située en conjugaison au noyau benzénique.

6. Utilisation selon la revendication 5,
**caractérisée en ce que**
le groupe alkényle est le groupe allyle ou vinyle.

7. Utilisation selon l'une quelconque des revendications 1 à 6,
**caractérisée en ce que**
dans les composés de formule (I) les substituants Y¹ et Y² sont situés en position 5 et/ou sont identiques.

8. Utilisation selon l'une quelconque des revendications 1 à 7,
**caractérisée en ce que**
le ligand anionique qui compense la charge dans les composés de formule (I) est mono- ou plurivalent, et dans ce dernier cas il neutralise d'une manière correspondante plusieurs atomes de métal de transition avec les ligands de salène et est en particulier un halogénure, un hydroxyde, un hexafluorophosphate, un perchlorate ou l'anion d'un acide carboxylique.

9. Utilisation selon l'une quelconque des revendications 1 à 8,
**caractérisée en ce que**
R¹, R² et R³, indépendamment les uns des autres, sont choisis parmi les groupes méthyle, éthyle, n-propyl, isopropyle, n-butyle, sec-butyle, iso-butyle et terbutyle.

10. Utilisation selon l'une quelconque des revendications 1 à 9,
**caractérisée en ce que**
le composé peroxygéné à activer est choisi dans le groupe qui comprend les peracides organiques, le peroxyde d'hydrogène, le perborate et le percarbonate ainsi que leurs mélanges.

11. Produit de lavage, de nettoyage ou de désinfection,
**caractérisé en ce qu'**
il contient de 0,0025 % en poids à 0,25 % en poids, en particulier de 0,01 % en poids à 0,1 % en poids d'un activateur de blanchiment conformément à la formule (I) et de 0,2 % en poids à 2 % en poids d'enzyme choisi dans la classe des protéases, des lipases, des cutinases, des amylases, des pullulanases, des cellulases, des oxydases et des peroxydases ainsi que de leurs mélanges à côté d'ingrédients usuels, compatibles avec le catalyseur de blanchiment.

12. Produit de lavage selon la revendication 11,
**caractérisé en ce qu'**
il contient de 5 à 50 % en poids - en particulier de 8 à 30 % en poids d'un agent tensioactif anionique et/ou non ionique,
jusqu'à 60 % en poids - en particulier de 5 à 40 % en poids de substance de structuration
de 0,2 à 0,7 % en poids d'enzyme,
jusqu'à 30 % en poids - en particulier de 6 à 20 % en poids d'un solvant organique choisi dans le groupe comprenant les alcools ayant de 1 à 4 atomes de carbone, les diols ayant de 2 à 4 atomes de carbone ainsi que leurs mélanges et les éthers qui peuvent dériver de ces classes de composés,
et jusqu'à 20 % en poids - en particulier de 1,2 à 17 % en poids d'un régulateur de pH.

13. Produit de lavage selon la revendication 12,
**caractérisé en ce qu'**
il contient en supplément aux constituants cités une quantité qui n'est pas supérieure à 50 % en poids - en particulier de 5 % en poids à 30 % en poids de composé peroxygéné choisi dans le groupe comprenant le peroxyde d'hydrogène, le perborate et le percarbonate ainsi que leurs mélanges.
